# EUROPÄISCHE PATENTSCHRIFT

(11) **EP 2 858 767 B1**
(45) Veröffentlichungstag und Bekanntmachung des Hinweises auf die Patenterteilung: **16.11.2016**
(21) Anmeldenummer: 13727612.7
(22) Anmeldetag: 07.06.2013
(51) Int. Cl.: B21B 31/07

(54) **WALZENANORDNUNG**
ROLL ARRANGEMENT
ENSEMBLE CYLINDRE

(30) Priorität: 12.06.2012 DE 102012209828
(43) Veröffentlichungstag der Anmeldung: 15.04.2015
(73) Patentinhaber: SMS group GmbH, 40237 Düsseldorf (DE)
(72) Erfinder: KELLER, Karl, 57271 Hilchenbach (DE); ALKEN, Johannes, 57076 Siegen (DE); ROEINGH, Konrad, 57271 Hilchenbach (DE); SCHEFFE, Kurt, 57271 Hilchenbach (DE)
(74) Vertreter: Klüppel, Walter
(86) Internationale Anmeldenummer: PCT/EP2013/061820
(87) Internationale Veröffentlichungsnummer: WO 2013/186141

(56) Entgegenhaltungen:
- EP-A2- 0 285 333
- US-A- 2 955 002

## Beschreibung

Die Erfindung betrifft eine Walzenanordnung in der Hüttentechnik, aufweisend eine Walze mit einem Walzenballen und zwei Walzenzapfen und mindestens eine Zapfenbuchse zum drehfesten Aufnehmen zumindest eines der Walzenzapfen, wobei die Mantelfläche des Walzenzapfens und die innere Mantelfläche der Zapfenbuchse komplementär zueinander zylinderförmig ausgebildet sind, und ein Mitnehmerelement als formschlüssige, drehfeste Verbindung zwischen der Zapfenbuchse und dem Walzenzapfen angeordnet ist.

Aus dem Stand der Technik sind Walzenanordnungen bekannt, bei denen der Walzenzapfen in einer zylinderförmigen oder kegeligen Zapfenbuchse aufgenommen ist. Zur Übertragung der Umfangskräfte sind zwischen der Zapfenbuchse und dem Walzenzapfen Mitnehmerelemente angeordnet.

Beispielsweise werden Ölfilmlager in Walzwerken zum Lagern einer Stützwalze, welche die Walzkraft aus Anstellzylindern übernehmen und diese an die Arbeitswalzen übertragen, eingesetzt. Dabei handelt es sich um hoch belastete Gleitlager, die meist im hohen Sommerfeldzahlenbereich, das heißt bei einer relativ niedrigen Drehzahl und bei hoher Belastung arbeiten. Bei den sehr hohen Drücken bis teilweise über 1500 bar, die sich in der Lastzone ausbilden, findet eine elastische Verformung bzw. Abflachung der druckbelasteten Flächen statt. Durch dieses Abflachen entsteht eine größere duckwirksame Fläche entgegen der Wirkrichtung der äußeren Kraft, die beispielsweise durch den Anstellzylinder aufgebracht wird. Das Lager kann somit mehr Last tragen. Diesen Effekt bezeichnet man als "Elastohydrodynamische (EHD) Tragkraftsteigerung". Um diesen Effekt noch zu verstärken werden so genannte Morgoil-KLX^{®}-Lager eingesetzt, die eine dünnwandige, kegelförmig ausgebildete Zapfenbuchse als Lauffläche besitzen; siehe auch US 6,468,194 und EP 1 213 061.

Aus der Druckschrift "Newsletter 01/2009, SMS Group, 16. Jahrgang, Nr.: 1, April 2009, Seite 50 und 51" sind Morgoil-KLX^{®}-Lager zur Walzenlagerung bekannt, bei denen eine Zapfenbuchse auf einem kegeligen Walzenzapfen aufgesetzt ist. Zur Drehmomentübertragung ist eine Passfeder zwischen der Zapfenbuchse und dem Walzenzapfen angeordnet.

Die Druckschriften DE 38 76 663 T2, US 2,955,002 und EP 0 285 333 A2 beschreiben eine zylinderförmige Buchse zum Tragen eines umlaufenden Lagers auf einem hydrodynamischen Schmierfilm.

Die EP 1 651 876 B1 betrifft ein Ölfilmlager für einen Walzenzapfen der in einer Lagerbuchse gelagert ist, wobei die Lagerbuchse mindestens zwei innen liegende Hydrostatiktaschen aufweist.

Die DE 38 76 663 T2 betrifft eine Buchse zum Tragen eines umlaufenden Lagers auf einem hydrodynamischen Schmierfilm.

Aus der DE 603 03 052 T2 ist eine Buchse zum drehbaren Tragen der Zapfenfläche eines Walzenzapfens in einem Walzwerk bekannt, wobei die zylinderförmige Buchse über ein Mitnehmerelement mit dem Walzenzapfen formschlüssig verbunden ist.

Nachteile der bisher bekannten Lösungen bestehen darin, dass zur Übertragung der sehr hohen Lasten eine den Lasten angepasste große Dimensionierung der Lagerung vorgesehen ist.

Der Erfindung liegt die Aufgabe zugrunde, die Tragkraft einer Walzenanordnung weiter zu erhöhen, ohne die Baugröße bzw. die Einbaugröße der Walzenlagerung zu vergrößern. Gleichzeitig sollen der Montageaufwand und die damit verbundenen Kosten möglichst gering sein.

Diese Aufgabe wird erfindungsgemäß durch die Merkmale des Anspruchs 1 gelöst. Die Erfindung beschreibt eine Walzenanordnung zum Einsatz in der Hüttentechnik, aufweisend eine Walze mit einem Walzenballen und zwei Walzenzapfen und mindestens eine Zapfenbuchse zum drehfesten Aufnehmen zumindest eines der Walzenzapfen. Die Mantelfläche des Walzenzapfens und die innere Mantelfläche der Zapfenbuchse sind zylinderförmig ausgebildet. Als formschlüssige drehfeste Verbindung ist ein Mitnehmerelement zwischen der Zapfenbuchse und dem Walzenzapfen angeordnet. Der Walzenzapfen ist mit radialem Spiel in der Zapfenbuchse gelagert, so dass im unbelasteten Zustand aufgrund des radialen Spiels ein umlaufender rotationssymmetrischer Hohlraum zwischen der Zapfenbuchse und dem Walzenzapfen ausgebildet ist. Kennzeichnend für die Erfindung ist, dass der Hohlraum durch eine rotationssymmetrische konkave Ausprägung an der Mantelfläche des Walzenzapfens und/oder an der inneren Mantelfläche der Zapfenbuchse vergrößert und begrenzt ist.

Der Hohlraum ist in Abhängigkeit der maximalen Lagerkraft genau vordimensioniert. Der umlaufende Hohlraum ist in Form eines rotationssymmetrischen Ringspalts im Sinne eines umlaufenden Hohlprofils in einer Ebene senkrecht zur Längsachse der Walzenanordnung ausgebildet. Vorteilhafterweise wird durch das Spiel erreicht, dass im lastfreien Zustand zwischen der Zapfenbuchse und dem Walzenzapfen keine Vorspannung auftritt.

Durch den erfindungsgemäßen Hohlraum entsteht zwischen der Zapfenbuchse und dem Walzenzapfen ein vergrößerter Freiraum, in welchen sich die Zapfenbuchse unter Belastung im räumlichen Bereich der Krafteinwirkung lokal abflachen kann. Durch die Abflachung der Zapfenbuchse wird die druckwirksame Fläche zur Aufnahme von Kräften vergrößert und die Belastbarkeit der Walzenanordnung deutlich gesteigert, ohne deren Baugröße vergrößern zu müssen. Näheres siehe im Kapitel "Funktionsweise" am Ende der Beschreibung.

Die konkaven Ausprägungen bilden/begrenzen jeweils einen rotationssymmetrischen Ringspalt als Teil des rotationssymmetrischen Gesamt-Hohlraums. Vorteilhafterweise ergibt sich hierdurch im Belastungsfall eine zusätzliche Vergrößerung der wirksamen Druckfläche zwischen der Zapfenbuchse und dem Walzenzapfen und in gleichem Maße zwischen der Zapfenbuchse und der Lagerbuchse , was zu einer weiteren Steigerung der Tragfähigkeit der Lagerung bei unveränderter Dimensionierung bzw. Einbaugröße führt.

Eine weitere Ausgestaltung der Erfindung sieht vor, dass die äußere Mantelfläche des Walzenzapfens und/oder die innere Mantelfläche der Zapfenbuchse im Bereich ihrer konkaven Ausprägung - im Längsschnitt der Walzenanordnung gesehen - zumindest abschnittsweise in Form einer Geraden, einer Sinuskurve, einer polygonalen Kurve R(x) n- ten Grades oder einer Kombination aus diesen konturiert ist.

Weiterhin ist vorgesehen, dass die Kontur der Mantelfläche des Walzenzapfens oder die Kontur der inneren Mantelfläche der Zapfenbuchse im Bereich ihrer konkaven Ausprägung - im Längsschnitt der Walzenanordnung gesehen - im Übergangsbereich zwischen zwei benachbarten Profilierungsabschnitten stetig und differenzierbar ist. Dadurch wird der Verlauf der Kontur, im Folgenden auch Profilierung genannt, durch die aneinandergrenzenden Profilierungsabschnitte kantenfrei, das heißt mit fließenden Übergängen gestaltet, um den Nachteilen einer möglichen Kerbwirkung entgegenzuwirken. Zudem wird im Belastungsfall die Bildung von Eindruckstellen, zum Beispiel Riefen, an den gegeneinander wirkenden Mantelflächen der Zapfenbuchse und des Walzenzapfens vermieden.

Weiterhin ist vorgesehen, dass die Kontur der Mantelfläche des VValzenzapfens oder die Kontur der inneren Mantelfläche der Zapfenbuchse im Bereich ihrer konkaven Ausprägung - im Längsschnitt der Walzenanordnung, d.h. in axialer Richtung gesehenkorreliert mit der Verteilung der Lagerkraft in axialer Richtung,
so dass unter Last lokal eine möglichst große Abflachung der Zapfenbuchse in ihrem elastischen Bereich erzielt wird, die zu einer maximalen Tragkraft der Walzenanordnung bei unveränderter Baugröße führt.

Weiterhin sieht die Erfindung vor, dass es sich bei der Walze um eine Stützwalze oder eine Zwischenwalze oder eine Arbeitswalze zur Verwendung in einem Walzgerüst handelt.

Im Übrigen ist vorgesehen, dass als Mitnehmerelement zwischen der Zapfenbuchse und dem Walzenzapfen zumindest eine Passfeder angeordnet ist. Vorteilhafterweise wird zur Kraftübertragung zumindest ein Normbauteil verwendet, das als kostengünstiges Standardbauteil zur Kraftübertragung bei Verschleiß oder Zerstörung problemlos ausgetauscht werden kann.

Gemäß einem weiteren Ausführungsbeispiel ist vorgesehen, dass die Anordnung mindestens ein Einbaustück mit einer Lagerbuchse aufweist, in welcher die Zapfenbuchse mit dem Walzenzapfen bzw. mit der Walze unter Verwendung eines tragenden Ölfilms zwischen der Zapfenbuchse und der Lagerbuchse gleitend gelagert ist.

Insgesamt wird mit der erfindungsgemäßen Anordnung eine einfache und kostengünstige Möglichkeit geschaffen, vorhandene Walzenanordnungen beispielsweise innerhalb einer Walzanlage durch erfindungsgemäße Walzenanordnungen zu ersetzen bzw. auszutauschen, um eine Tragkraftsteigerung bzw. eine Leistungssteigerung der Lagerung zu schaffen, ohne den vorhandenen Einbauraum verändern zu müssen. Die erfindungsgemäße Anordnung ist leicht zu montieren. Im Reparaturfall ist ein einfacher und schneller Austausch möglich. Damit werden bei gleichzeitiger Effizienzsteigerung die Wartungs- und Instandhaltungskosten insgesamt gesenkt.

Weitere Vorteile und Einzelheiten der Erfindung ergeben sich aus den Unteransprüchen und aus der nachfolgenden Beschreibung, in der die in den Figuren dargestellten Ausführungsformen der Erfindung näher erläutert werden. Dabei sind neben den oben aufgeführten Kombinationen von Merkmalen auch Merkmale allein oder in anderen Kombinationen erfindungswesentlich.

### Beschreibung der Figuren

Die Erfindung wird nachfolgende unter Bezugnahme auf die Figuren 1 bis 3b detailliert beschrieben. Es zeigen:
- Figur 1: Walze mit profilierter zylindrischer Zapfenbuchse;
- Figur 1a: Detaildarstellung der Tiefe t der Profilierung
- Figur 2a: Lagerung des Walzenzapfens in der Zapfenbuchse mit Radialspiel im unbelasteten Zustand;
- Schnittdarstellung im Bereich des maximalen Gesamthohlraums
- Figur 2b: Verformung der Zapfenbuchse mit Radialspiel im belasteten Zustand;
- Schnittdarstellung im Bereich des maximalen Gesamthohlraums
- Figur 3a: schematische Darstellung der Lagerung der Zapfenbuchse auf dem Walzenzapfen mit Lagerspiel;
- Figur 3b: unterschiedliche Profilverläufe für die Mantelfläche des Walzenzapfens bzw. innere Mantelfläche der Zapfenbuchse.

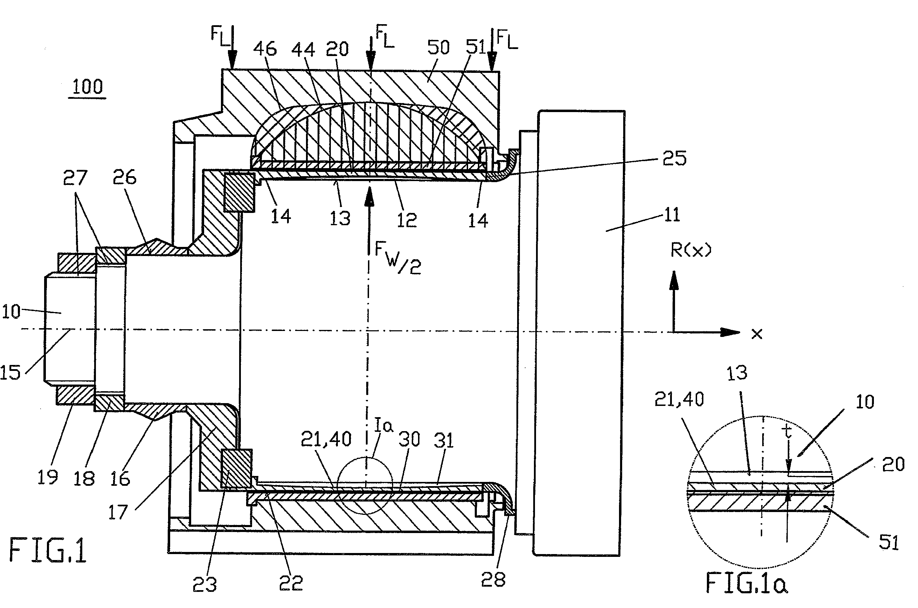

In der Figur 1 ist eine Walzenanordnung 100 zum Einsatz beispielsweise in der Hüttentechnik dargestellt, mit einer Walze mit einem Walzenballen 11 und zumindest einem zylinderförmigen Walzenzapfen 10. Der Walzenzapfen 10 ist in einer zu dem Walzenzapfen 10 komplementär zylinderförmig ausgebildeten Aufnahmebohrung einer Zapfenbuchse 20 mit Radialspiel drehfest gelagert. Das Radialspiel zwischen der Zapfenbuchse 20 und dem Walzenzapfen 10 ist gebildet durch einen rotationssymmetrisch bzw. um den Walzenzapfen 10 umlaufenden Hohlraum 12. Durch das Radialspiel lässt sich die Zapfenbuchse 20 leichtgängig auf den Walzenzapfen 10, oder umgekehrt der Walzenzapfen 10 in die Zapfenbuchse 20, aufschieben bzw. einschieben. Das Radialspiel, als Durchmesserdifferenz zwischen Zapfenbuchse 20 und Walzenzapfen 10, liegt maximal bevorzugt im Bereich zwischen 0,10 mm und 0,80 mm.

Die Wandstärke d der zylinderförmigen Zapfenbuchse beträgt zwischen 10 mm bis 75 mm ohne Berücksichtigung einer weiter unten beschriebenen optionalen rotationssymmetrischen konkaven Ausprägung.

Zur Begrenzung der Aufschiebeposition der Zapfenbuchse 20 beim Aufschieben auf den Walzenzapfen 10 ist zwischen der Stirnseite des Walzenballens 11 und der Zapfenbuchse 20 ein Distanzring 28 mit einem Anschlag 25 angeordnet. Alternativ kann der Walzenballen 11 stirnseitig mit einem Absatz als Anschlag 25 (nicht dargestellt) versehen sein, der einstückig mit dem Walzenballen ausgebildet ist. Die Zapfenbuchse 20 wird nach dem Aufschieben auf den Walzenzapfen 10 mit einem Druckschulterring 17 über einen Axiallager- Innenring 16, der optional zur Lagerung des Walzenzapfens 10 angeordnet ist, und einer Mutter 18 in axialer Richtung (x) gegen den Anschlag 25 gespannt und so gegen axiales Verschieben gesichert. Dabei ist der Walzenzapfen 10 an seinem Ende zur Aufnahme des Druckschulterrings 17 mit einem Nabenansatz 26 versehen und im Anschluss daran mit einem Gewindezapfen 27 zur Aufnahme der Mutter 18. Die Mutter 18 kann zusätzlich mit einer Verdrehsicherung 19, zum Beispiel einer Kontermutter, gegen Lösen gesichert sein.

Zur Herstellung einer formschlüssigen Verbindung und zur Übertragung der bei einer Drehbewegung auftretenden Umfangskräfte ist zwischen der Zapfenbuchse 20 und dem Walzenzapfen 10 zumindest ein Mitnehmerelement 23, zum Beispiel in Form einer Passfeder, angeordnet. In einer weiteren möglichen Ausführungsform kann zumindest das eine Mitnehmerelement auch einstückig mit dem Walzenzapfen 10 oder der Zapfenbuchse 20 ausgebildet sein.

Beispielsweise ist die innere Mantelfläche 21 der Zapfenbuchse 20 mit einer umlaufenden oder rotationssymmetrischen konkaven Kontur, nachfolgend auch Ausprägung oder Profilierung 40 genannt, versehen, die beispielsweise durch Drehen und/oder Schleifen hergestellt ist. Die Profilierung 40 der inneren Mantelfläche 21 der Zapfenbuchse 20 ist im Bereich ihrer konkaven Ausprägung - im Längsschnitt der Zapfenbuchse 20 gesehen - zumindest abschnittsweise in Form einer Geraden, einer Sinuskurve, einer polygonalen Kurve R(x) n- ten Grades, vorzugsweise zweiten Grades in Form einer Parabel, oder einer Kombination aus diesen konturiert. Alternativ oder zusätzlich kann auch an der Mantelfläche des Walzenzapfens eine umlaufende oder rotationssymmetrische Kontur ausgebildet sein.

Durch die konkaven Kurvenverläufe der Profilierung an dem Walzenzapfen 10 und/oder an der Zapfenbuchse 20 (ersteres ist in Figur 1 nicht gezeigt) bilden sich zwangsläufig Vertiefungen mit einer Tiefe t in Form von rotationssymmetrischen Ringspalten, die eine Vergrößerung des bereits durch das im unbelasteten Zustand zwischen der Zapfenbuchse 20 und dem Walzenzapfen 10 vorhandene Radialspiel gebildeten rotationssymmetrischen Hohlraums 12 ergeben. Der Hohlraum 12 ist auch insgesamt, das heißt bestehend aus Radialspiel plus Vertiefungen, in Form eines Ringspalts im Sinne eines umlaufenden Hohlprofils ausgebildet und verläuft in einer Ebene senkrecht zur Mittelachse 15 des Walzenzapfens 10 um den Walzenzapfen 10.

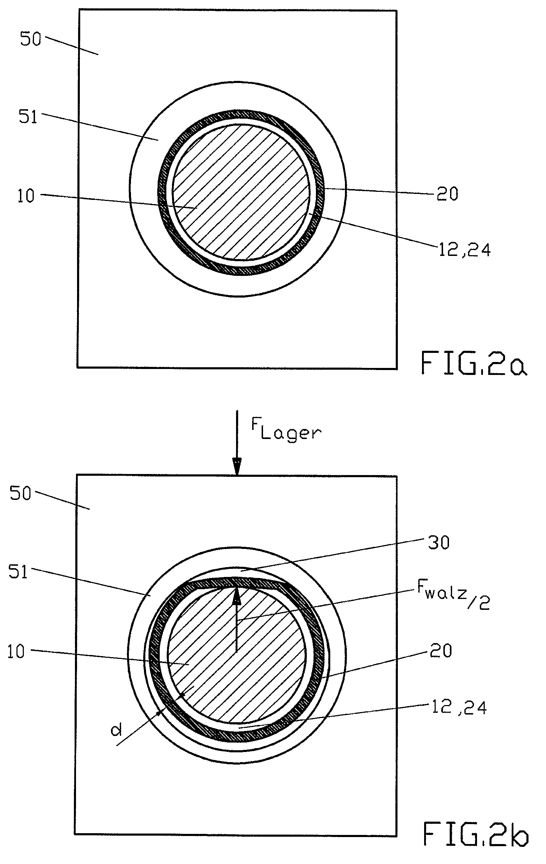

Bei Beaufschlagung der Walzenanordnung mit einer Walzkraft F_{w} (Actio), die von der betraglich halb großen aber entgegen gesetzt gerichteten Lagerkraft F_{L} (Reactio) an beiden Walzenzapfen kompensiert wird, passt bzw. schmiegt sich die Profilierung 40 der inneren Mantelfläche 21 der Zapfenbuchse 20 lokal und elastisch der zylinderförmigen Mantelfläche 13 des Walzenzapfens 10 an, wodurch sich folglich auch eine vergrößerte Lagerfläche zwischen der Zapfenbuchse 20 und der Lagerbuchse 51, wie in der Figur 2b näher gezeigt, ausbildet und zu einer Optimierung der Druckverteilung der Lagerkraft F führt. In der Figur 1 zeigen die Kurve 44 die Druckverteilung gemäß dem Stand der Technik und die Kurve 46 die optimierte Druckverteilung der erfindungsgemäßen Walzenanordnung 100 im Belastungsfall, jeweils in axialer Richtung.

Figur 1 zeigt die Walzenanordnung in teilbelastetem Zustand. Die Teillast ist so groß, dass der im unbelasteten Zustand durch das Radialspiel bedingte Teil des Hohlraums in Figur 1 am Ort der Krafteinwirkung oben an der Walzenanordnung zusammengedrückt ist. Die Zapfenbuchse liegt bei der Teillastdarstellung gemäß Figur 1 nur in Teilbereichen, konkret nur mit den Auflageflächen 14 an beiden Seiten auf den Walzenzapfen auf. Dagegen ist der durch die konkave Profilierung der Zapfenbuchse gebildete Teil des Hohlraums jedoch noch vorhanden und erkennbar. Die Krafteinwirkung in Figur 1 ist noch nicht maximal. Insbesondere ist sie noch nicht so groß, dass auch der durch die konkave Profilierung der Zapfenbuchse gebildete zusätzliche Teil des Hohlraums an der Oberseite der Walzenanordnung verschwindet und dass die Zapfenbuchse über ihre gesamte axiale Länge auf dem Walzenzapfen zur Anlage kommt. Dieser Lastfall bedarf noch größerer Walz- und Lagerkräfte F_{w}, F_{L} (in Figur 1 nicht dargestellt).

Die Tiefe t der Profilierung 40 bzw. die Größe des daraus resultierenden zusätzlichen Hohlraums 12 zwischen der Zapfenbuchse 20 und dem Walzenzapfen 10 ist in Abhängigkeit der maximal auftretenden Walzkraft F_{W} und des Elastizitätsmoduls der Zapfenbuchse 20 derart angepasst, dass das Volumen des Hohlraums 12 um so größer ausgebildet ist, je größer die maximale Walzkraft F_{W} im belasteten Zustand ist, wobei die Verformung der Zapfenbuchse 20 ausschließlich im elastischen Bereich bleibt. Die tatsächlichen Tiefen t der Profilierungen bewegen sich im Mikrometer (µm)-Bereich, bevorzugt bis zu 1000µm.

Bei der dargestellten Walze kann es sich vorzugsweise um eine Stützwalze oder eine Zwischenwalze oder eine Arbeitswalze zur Verwendung in einem Walzgerüst handeln. Dabei kann das Walzgerüst als Teil einer Walzlinie in einem Walzwerk angeordnet sein.

Zudem kann vorgesehen sein, dass mindestens ein Einbaustück 50 mit einer Lagerbuchse 51 zur Aufnahme der Zapfenbuchse 20 mit dem Walzenzapfen 10 vorgesehen ist, wobei zwischen der Lagerbuchse 51 des Einbaustücks 50 und der äußeren Mantelfläche 22 der Zapfenbuchse 20 ein tragender Ölfilm 30 vorgesehen ist. Diese Anordnung wird auch als Ölfilmlagerung bezeichnet. In einer bevorzugten Ausführung ist die innere Mantelfläche der Lagerbuchse 51 mit einer Lagermetallauskleidung, beispielsweise mit Weißmetall, beschichtet.

Zwischen der Zapfenbuchse 20 und dem Walzenzapfen 10 ist vorzugsweise ein Schmierfilm 31 angeordnet, um eine Mikro-Kaltverschweißung durch Mikro-Reibung zu vermeiden.

Die Detaildarstellung in der Figur 1a verdeutlicht im vergrößerten Maßstab das Gesamtspiel zwischen der äußeren Mantelfläche des Walzenzapfens 13 und der inneren Mantelfläche der Zapfenbuchse 21. Das Gesamtspiel resultiert aus der vorgewählten Passungstoleranz (Spielpassung) zwischen dem Walzenzapfen 10 und der Zapfenbuchse 20, welches in der Figur 1 a nicht näher bezeichnet ist, und der Tiefe t der Profilierung.

Die Darstellung in der Figur 2a zeigt in einer Schnittdarstellung die Lagerung des Walzenzapfens 10 in der Zapfenbuchse 20 mit Radialspiel 24 im unbelasteten Zustand. Das Radialspiel zwischen der Zapfenbuchse 20 und dem Walzenzapfen 10 bildet den umlaufenden Hohlraum 12.

Die Figur 2b zeigt die Lagerung des Walzenzapfens 10 in der Zapfenbuchse 20 mit Radialspiel im belasteten Zustand. Der Hohlraum 12 zwischen der Zapfenbuchse 20 und dem Walzenzapfen 10 wird im Belastungsfall an der Lasteingriffstelle lokal unterbrochen. Die Zapfenbuchse 20 stützt sich, wie die Darstellung zeigt, an der belasteten Stelle auf dem Walzenzapfen 10 ab und schmiegt sich an den Walzenzapfen an. Die Zapfenbuchse 20 erfährt bei Druckbelastung eine elastische Verformung, die von dem genau vordimensionierten Hohlraum 12 im Kontaktbereich aufgenommen wird. Die Druckverteilung zwischen der Zapfenbuchse 20 und dem Walzenzapfen 10 erfolgt derart, dass sich eine vergrößerte abgeflachte Fläche zwischen der Zapfenbuchse 20 und dem Walzenzapfen 10 zur Kraftübertragung ausbildet, wobei sich die Abflachung in gleichem Maße an die äußere Mantelfläche 22 der Zapfenbuchse 20 überträgt und sich somit eine maximale Auflagefläche bzw. ein hydrodynamischer Druckberg zwischen der Zapfenbuchse 20 und dem Walzenzapfen 10 und zwischen der Zapfenbuchse 20 und der Lagerbuchse 51 bildet; Näheres zur Funktionsweise siehe weiter unten.

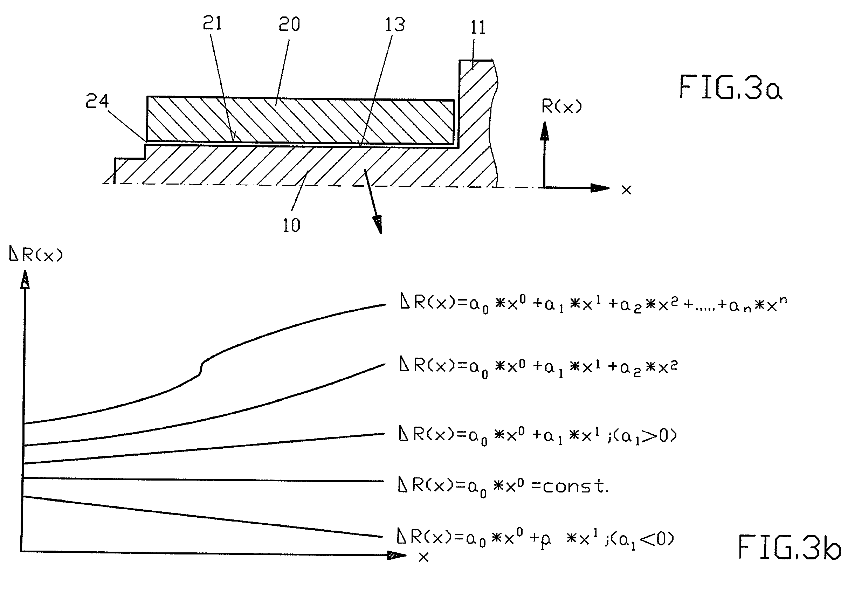

Die Figur 3a zeigt prinzipiell eine Walzenanordnung 100 mit der Walze und zumindest einer Zapfenbuchse 20, die mit Radialspiel 24 auf dem Walzenzapfen 10 angeordnet ist. Dabei sind die Mantelfläche 13 des Walzenzapfens 10 und die innere Mantelfläche 21 der Zapfenbuchse 20 zylinderförmig ausgebildet, wobei die jeweiligen Mantelflächen 13, 21 komplementär zueinander ausgebildet sind und - im unbelasteten Zustand - mit Radialspiel einander gegenüber liegen, wodurch sich ein rotationssymmetrischer Hohlraum bildet.

Um bei der in der Figur 3a gezeigten Walzenanordnung die Tragkraft zu erhöhen, ist der Hohlraum aufgrund des radialen Spiels in Abhängigkeit der auftretenden Walz- und Lagerkraft F_{W}, F_{L} geeignet zu dimensionieren. Zusätzlich können dazu optional erfindungsgemäß rotationssymmetrische Profilierungen 40 der inneren Mantelfläche 21 der Zapfenbuchse 20 und/oder der Mantelfläche 13 des Walzenzapfens 10 vorgesehen sein, um den Hohlraum weiter zu vergrößern. Figur 3b beschreibt beispielhaft verschiedene mögliche Profilierungen in axialer Richtung in Form von mathematischen Funktionen R(x) n- ten Grades, die je nach Lastfall auch in Kombination mit anderen Profilierungen Verwendung finden können. Um einen gleichmäßigen kantenfreien Übergang bei miteinander kombinierten Profilabschnitten zu gewährleisten, ist die Profilierung 40 im Übergangsbereich zwischen zwei benachbarten Profilabschnitten stetig und differenzierbar ausgebildet. Es sei erwähnt, dass die in der Figur 3b dargestellten Kurvenverläufe nicht die tatsächlich in der Praxis umsetzbaren Profilierungen beschreiben. Die dargestellte Vielzahl an Kurven- bzw. Profilabschnitten dient lediglich der schematischen Darstellung unterschiedlicher möglicher Profilierungsvarianten.

### Funktionsweise

Durch den aus dem Radialspiel und optional zusätzlich auch aus der Profilierung 40 resultierenden erfindungsgemäßen rotationssymmetrischen Hohlraum 12 zwischen der Zapfenbuchse 20 und dem Walzenzapfen 10 entsteht zwischen der Zapfenbuchse 20 und dem Walzenzapfen ein vergrößerter Freiraum, in welchen sich die Zapfenbuchse 20 am Ort der Krafteinwirkung ausdehnen kann.

Konkret wird im Walzbetrieb in einem Walzgerüst die zumindest im Wesentlichen vertikal nach oben gerichtete Walzkraft F_{w} auf die obere (Stütz-) Walze ausgeübt, während gleichzeitig eine zumindest im Wesentlichen vertikal nach unten gerichtete Walzkraft F_{w} auf die untere (Stütz-) Walze ausgeübt wird. Diese Walzkräfte übertragen sich von den Walzenballen je zur Hälfte auf die Walzenzapfen, wodurch die Walzenzapfen im oberen Einbaustück nach oben und im unteren Einbaustück nach unten gedrückt werden.

Die Walzkräfte übertragen sich gemäß einer Wirkungskette vom Walzenzapfen weiter über die Zapfenbuchse, den tragenden Ölfilm zwischen Zapfenbuchse und Lagerbuchse und die Lagerbuchse auf das Einbaustück. Von dem Einbaustück werden die Walzkräfte weiter in das Walzgerüst abgeleitet, in welchem das Einbaustück gelagert ist.

Das Einbaustück und auch die in dem Einbaustück gelagerte Lagerbuchse sollen idealisiert als unnachgiebig und inkompressibel gegenüber den Walzkräften angesehen werden. Das heißt, das Einbaustück und die Lagerbuchse fangen die auf sie wirkenden jeweils halben Walzkräfte F_{w/2} (Aktio) vollständig auf, indem sie jeweils betraglich gleiche, aber entgegen gesetzt gerichtetete Lagerkräfte F_{L} (Reaktio) entgegenhalten.

Bereits eine Beaufschlagung eines Walzenzapfens während des Walzbetriebs mit einer geringen Walzkraft F_{w} bewirkt, dass der Walzenzapfen 10 mit der Zapfenbuchse 20 in Richtung der Walzkraft F_{w} gegen den tragenden Ölfilm 30 und dieser gegen die Lagerbuchse 51 und das Einbaustück drückt; siehe Figur 2b. Dabei stößt die Zapfenbuchse 20 jedoch auf den inkompressiblen tragenden Ölfilm 30, welcher seinerseits von der unnachgiebigen Lagerbuchse 51 und dem unnachgiebigen Einbaustück 50 an einem Ausweichen in Richtung der Walzkraft gehindert wird. Im Ergebnis ist die Zapfenbuchse deshalb von der entgegen stehenden Lagerkraft F_{L} an einem Ausweichen in Richtung der Walzkraft gehindert.

Die Zapfenbuchse 20 selber ist in Verbindung mit dem erfindungsgemäßen Hohlraum 12 zum Walzenzapfen 10 hin das schwächste Glied in der oben aufgezeigten Wirkungskette der (Walz-)Kraft.

Weil die Zapfenbuchse 20 der Walzkraft nicht ausweichen kann, kommt es im Belastungsfalle während des Walzbetriebs zu einer elastischen Verformung der Zapfenbuchse 51. Die Zapfenbuchse wird durch die Walzkraft F_{w/2} bzw. die entgegen gerichtete Lagerkraft F_{L} in den - ursprünglichen - Hohlraum 12 hinein verformt und wird dabei abgeflacht. Die Abflachung erfolgt maximal soweit, bis die Zapfenbuchse auf den Walzenzapfen 10 drückt und von diesem abgestützt wird. Die Zapfenbuchse 20 passt sich lokal elastisch der Profilierung 40 des Walzenzapfens an und verformt sich nach Entlastung wieder in den ursprünglichen Zustand. Durch die Abflachung wird die druckwirksame Fläche zwischen der Zapfenbuchse 20 und der Lagerbuchse 51 vergrößert. Zwischen der Zapfenbuchse 20 und der Lagerbuchse 51 ist der tragende Ölfilm 30 angeordnet, welcher eine so genannte hydrodynamische Ölfilmlagerung bildet. Die erfindungsgemäße Walzenanordnung führt aufgrund der Vergrößerung der druckwirksamen Fläche zu einer Steigerung der Tragfähigkeit der hydrodynamischen Ölfilmlagerung zwischen der Zapfenbuchse und der Lagerbuchse.

In der Realität wirkt die Walzkraft bzw. die Lagerkraft nicht punkt- oder linienförmig, sondern in Form eines Kraftgebirges. Das Kraftgebirge hat eine flächige Ausdehnung in Umfangsrichtung und in axialer Richtung. Durch die Abflachung der Zapfenbuchse und die damit verbundene Vergrößerung der druckwirksamen Fläche wird eine deutliche Tragkraftsteigerung der Walzenanordnung für das flächig ausgedehnte Kraftgebirge erreicht.

Die erfindungsgemäße Walzenanordnung trägt auch deutlich mehr gegenüber einer Walzenanordnung, bei der die Zapfenbuchse bereits im unbelasteten Zustand kraftschlüssig mit Vorspannung, zum Beispiel durch Schrumpfen, mit dem Walzenzapfen verbunden ist. Die für das elastische Abflachen der Zapfenbuchse notwendige Kraftbeaufschlagung ist aufgrund des erfindungsgemäßen Hohlraumes geringer als bei Konstruktionen mit Vorspannung zwischen Lagerbuchse und Zapfen. Bei vorgespannten Konstruktionen sind größere Kräfte erforderlich, um die gleiche Verformung der Zapfenbuchse zu realisieren.

### Anders ausgedrückt:

Wegen der relativ dünnen Wandstärke der Zapfenbuchse 20 wird sich die Verformung unter Belastung an der inneren Mantelfläche 21 der Zapfenbuchse 20 ohne Veränderung, das heißt gleichsinnig an der äußeren Mantelfläche 22 der Zapfenbuchse 20 abbilden, und führt damit zu einer Vergrößerung / Verbreiterung der der Krafteinwirkung entgegengesetzten Druckfläche zwischen der Zapfenbuchse 20 und der Lagerbuchse 51. Dies wiederum führt zu einer gleichmäßigen Verteilung des Schmierfilmdrucks, so dass eine größere Kraft aufgenommen wird, ohne dass der Spitzendruck im tragenden Ölfilm 30 die Grenzwerte des Werkstoffs der Lagerbuchse bzw. einer Lagermetallauskleidung an der Lagerbuchse überschreitet. Folglich führt die erfindungsgemäße Anordnung zu einer Steigerung der Tragfähigkeit der hydrodynamischen Schmierfilm- bzw. Ölfilmlagerung zwischen der Zapfenbuchse 20 und der Lagerbuchse 51.

### Bezugszeichenliste

- 100: Walzenanordnung
- 10: Walzenzapfen
- 11: Walzenballen
- 12: Hohlraum
- 13: Mantelfläche des Walzenzapfens
- 14: Auflagefläche
- 15: Mittelachse
- 16: Axiallager- Innenring
- 17: Druckschulterring
- 18: Mutter
- 19: Kontermutter
- 20: Zapfenbuchse
- 21: innere Mantelfläche der Zapfenbuchse
- 22: äußere Mantelfläche der Zapfenbuchse
- 23: Mitnehmerelement
- 24: Radialspiel
- 25: Anschlag
- 26: Nabenansatz
- 27: Gewindezapfen
- 28: Distanzring

- 30: tragender Ölfilm
- 31: Schmierfilm
- 40: Profilierung
- 44: Druckverteilung - Stand der Technik
- 46: optimierte Druckverteilung
- 50: Einbaustück
- 51: Lagerbuchse
- R(x): Profilierung als mathematische Funktion
- x: Koordinate in Achsrichtung
- F_{W}: Walzkraft
- F_{L}: Lagerkraft
- t: Tiefe der Profilierung
- d: Wandstärke der Zapfenbuchse

## Patentansprüche

1. Walzenanordnung (100) in der Hüttentechnik, aufweisend:
eine Walze mit einem Walzenballen (11) und zwei Walzenzapfen (10), und mindestens eine Zapfenbuchse (20) zum drehfesten Aufnehmen zumindest eines der Walzenzapfen (10), wobei die Mantelfläche (13) des Walzenzapfens (10) und die innere Mantelfläche (21) der Zapfenbuchse (20) komplementär zylinderförmig ausgebildet sind, und
ein Mitnehmerelement (25) als formschlüssige drehfeste Verbindung zwischen der Zapfenbuchse (20) und dem Walzenzapfen (10),
wobei der Walzenzapfen (10) mit radialem Spiel in der Zapfenbuchse (20) gelagert ist, und
wobei im unbelasteten Zustand ein umlaufender rotationssymmetrischer Hohlraum (12) in Form des radialen Spiels zwischen der Zapfenbuchse (20) und dem Walzenzapfen (10) ausgebildet ist,
**dadurch gekennzeichnet, dass**
der Hohlraum (12) durch eine rotationssymmetrische und - im Längsschnitt der Walzenanordnung (100) gesehen - konkave Ausprägung an der Mantelfläche (13) des Walzenzapfens (10) und/oder an an der inneren Mantelfläche (21) der Zapfenbuchse (20) begrenzt ist.

2. Anordnung nach Anspruch 1,
**dadurch gekennzeichnet, dass**
die Mantelfläche des Walzenzapfens (10) oder die innere Mantelfläche (21) der Zapfenbuchse (20) im Bereich ihrer konkaven Ausprägung - im Längsschnitt der Walzenanordnung (100) gesehen - zumindest abschnittsweise in Form einer Geraden, einer Sinuskurve, einer polygonalen Kurve R(x) n- ten Grades oder einer Kombination aus diesen konturiert ist.

3. Anordnung nach Anspruch 2,
**dadurch gekennzeichnet, dass**
die Kontur (50) der Mantelfläche des Walzenzapfens (10) oder die innere Mantelfläche (21) der Zapfenbuchse (20) im Bereich ihrer konkaven Ausprägung - im Längsschnitt der Walzenanordnung (100) gesehen - im Übergangsbereich zwischen zwei benachbarten Abschnitten stetig und differenzierbar ist.

4. Anordnung nach einem der vorangegangenen Ansprüche,
**dadurch gekennzeichnet, dass**
das Volumen des Hohlraums (12) umso größer ausgebildet ist, je größer die maximale Lagerkraft F im belasteten Zustand ist, solange die Verformung der Zapfenbuchse (20) im elastischen Bereich bleibt.

5. Anordnung nach einem der vorangegangenen Ansprüche,
**dadurch gekennzeichnet, dass**
es sich bei der Walze (10) um eine Stützwalze oder eine Zwischenwalze oder eine Arbeitswalze zur Verwendung in einem Walzgerüst handelt.

6. Anordnung nach einem der vorangegangenen Ansprüche,
**dadurch gekennzeichnet, dass**
das Mitnehmerelement (25) zwischen der Zapfenbuchse (20) und dem Walzenzapfen (10) zumindest in Form von einer Passfeder ausgebildet ist.

7. Anordnung nach einem der vorangegangenen Ansprüche,
**dadurch gekennzeichnet, dass**
die Anordnung weiterhin aufweist:
mindestens ein Einbaustück (40) mit einer Lagerbuchse (41), in welcher die Zapfenbuchse (20) mit dem Walzenzapfen (10) bzw. mit der Walze unter Verwendung eines tragenden Ölfilms (30) zwischen der Zapfenbuchse (20) und der Lagerbuchse (41) gleitend gelagert ist.

## Claims

1. Roll arrangement (100) in metallurgy, comprising:
a roll with a roll barrel (11) and two roll pins (10), and at least one pin bush (20) for reception of at least one of the roll pins (10) to be secure against relative rotation, wherein the circumferential surface (13) of the roll pin (10) and the inner circumferential surface (21) of the pin bush (20) are of complementary cylindrical form and
an entrainer element (25) as mechanically positive rotationally-fast connection between the pin bush (20) and the roll pin (10),
wherein the roll pin (10) is journalled with radial play in the pin bush (20) and
wherein in the unloaded state an encircling, rotationally symmetrical cavity (12) in the form of the radial play is formed between the pin bush (20) and the roll pin (10),
**characterised in that**
the cavity (12) is bounded by a rotationally symmetrical shaped portion, which is concave as seen in longitudinal section of the roll arrangement (100), at the circumferential surface (13) of the roll pin (10) and/or at the inner circumferential surface (21) of the pin bush (20).

2. Arrangement according to claim 1, **characterised in that** the circumferential surface of the roll pin (10) or the inner circumferential surface (21) of the pin bush (20) as seen in longitudinal section of the roll arrangement (100) is contoured in the region of the concave shaped portion thereof at least in a section in the form of a straight line, a sine curve, a polygonal curve R(x) of nth degree or a combination thereof.

3. Arrangement according to claim 2, **characterised in that** the contour (50) of the circumferential surface of the roll pin (10) or the inner circumferential surface (21) of the pin bush (20) in the region of the concave shaped portion thereof, as seen in longitudinal section of the roll arrangement (100), is constant and differentiable in the transition region between two adjacent sections.

4. Arrangement according to any one of the preceding claims, **characterised in that** a volume of the cavity (12) is formed so as to be larger the greater the maximum bearing force F in the loaded state as long as the deformation of the pin bush (20) remains in the elastic range.

5. Arrangement according to any one of the preceding claims, **characterised in that** the roll (10) is a backing roll or an intermediate roll or a working roll for use in a roll stand.

6. Arrangement according to any one of the preceding claims, **characterised in that** the entrainer element (25) between the pin bush (20) and the roll pin (10) is constructed at least in the form of a key.

7. Arrangement according to any one of the preceding claims, **characterised in that** the arrangement further comprises:
at least one chock (40) with a bearing bush (41), in which the pin bush (20) together with a roll pin (10) or with the roll is slidably mounted with use of a supporting oil film (30) between the pin bush (20) and the bearing bush (41).

## Revendications

1. Agencement de cylindres (100) dans la technique métallurgique, présentant :
un cylindre comprenant une table du cylindre (11) et deux tourillons de cylindres (10), et au moins une douille de tourillon (20) pour la réception en antirotation d'au moins un des tourillons de cylindres (10), la surface latérale (13) du tourillon de cylindre (10) et la surface latérale interne (21) de la douille de tourillon (20) étant réalisées pour prendre une configuration cylindrique complémentaire, et
un élément d'entraînement (25) sous la forme d'une liaison antirotative par complémentarité de forme entre la douille de tourillon (20) et le tourillon de cylindre (10) ;
dans lequel le tourillon de cylindre (10) est monté avec un jeu radial dans la douille de tourillon (20) ; et
dans lequel, à l'état non chargé, on obtient un espace creux périphérique (12) symétrique en rotation sous la forme du jeu radial entre la douille de tourillon (20) et le tourillon de cylindre (10) ;
**caractérisé en ce que** l'espace creux (12) est délimité par une empreinte symétrique en rotation et concave - lorsqu'on regarde dans une vue en coupe longitudinale de l'agencement de cylindre (100) - contre la surface latérale (13) du tourillon de cylindre (10) et/ou contre la surface latérale interne (21) de la douille de tourillon (20).

2. Agencement selon la revendication 1, **caractérisé en ce que** la surface latérale du tourillon de cylindre (10) ou la surface latérale interne (21) de la douille de tourillon (20), dans la zone de son empreinte concave - lorsqu'on regarde dans une vue en coupe longitudinale de l'agencement de cylindre (100) - présente, au moins par tronçons, un contour sous la forme d'une ligne droite, d'une courbe sinusoïdale, d'une courbe polygonale R(x) de n degrés ou d'une combinaisons desdites formes.

3. Agencement selon la revendication 2, **caractérisé en ce que** le contour (50) de la surface latérale du tourillon de cylindre (10) ou de la surface latérale interne (21) de la douille de tourillon (20), dans la zone de son empreinte concave - lorsqu'on regarde dans une vue en coupe longitudinale de l'agencement de cylindre (100) - est continu et peut être différencié dans la zone de transition entre deux tronçons voisins.

4. Agencement selon l'une quelconque des revendications précédentes, **caractérisé en ce que** le volume de l'espace creux (12) possède une grandeur qui est proportionnelle à la force d'appui maximale F à l'état chargé, pour autant que la déformation de la douille de tourillon (20) reste dans la plage élastique.

5. Agencement selon l'une quelconque des revendications précédentes, **caractérisé en ce que**, en ce qui concerne le cylindre (10), il s'agit d'un cylindre de soutien ou d'un cylindre intermédiaire ou d'un cylindre de travail à utiliser dans une cage de laminoir.

6. Agencement selon l'une quelconque des revendications précédentes, **caractérisé en ce que** l'élément d'entraînement (25) entre la douille de tourillon (20) et le tourillon de cylindre (10) est réalisé au moins sous la forme d'un ressort d'ajustage.

7. Agencement selon l'une quelconque des revendications précédentes, **caractérisé en ce que** l'agencement présente en outre :
au moins une empoise de cylindre (40) comprenant une douille de palier (41) dans laquelle est montée en glissement la douille de cylindre (20) avec le tourillon de cylindre (10), respectivement avec le cylindre en utilisant un film d'huile porteur (30) entre la douille de tourillon (20) et la douille de palier (41).
